# EUROPÄISCHE PATENTANMELDUNG

(11) **EP 3 565 089 A1**
(43) Veröffentlichungstag der Anmeldung: **06.11.2019**
(21) Anmeldenummer: 18170757.1
(22) Anmeldetag: 04.05.2018
(51) Int. Cl.: H02K 3/30, H02K 3/34, H02K 15/12

(54) **ELEKTRISCHES ISOLATIONSSYSTEM EINES ELEKTROMOTORS UND HERSTELLUNGSVERFAHREN DAZU**

(71) Anmelder: Siemens Aktiengesellschaft, 80333 München (DE)
(72) Erfinder: Katzenberger, Tobias, 97631 Bad Königshofen STT Untereßfeld (DE); Plochmann, Bastian, 91413 Neustadt an der Aisch (DE)

(57) **Zusammenfassung**

Die Erfindung betrifft ein verbessertes elektrisches Isolationssystem eines Elektromotors, insbesondere ein hinsichtlich der Isolation der Draht-Wicklungen in den Nuten des Blechpakets gegen das Blechpaket verbessertes elektrisches Isolationssystem EIS. Außerdem betrifft die Erfindung ein Herstellungsverfahren zur Herstellung eines derart verbesserten elektrischen Isolationssystems eines Elektromotors wie eine Nutisolation. Gemäß der vorliegenden Erfindung wird eine Imprägnierung eines Leiter-bestückten Blechpakets nicht durch Tauchimprägnierung, sondern durch gezieltes Einbringen eines Imprägnierharzes, das mit Volumen-vergrößernden Partikel gefüllt ist, in die Nuten des Blechpakets vorgeschlagen.

## Beschreibung

Die Erfindung betrifft ein verbessertes elektrisches Isolationssystem eines Elektromotors, insbesondere ein hinsichtlich der Isolation der Draht-Wicklungen in den Nuten des Blechpakets gegen das Blechpaket verbessertes elektrisches Isolationssystem EIS. Außerdem betrifft die Erfindung ein Herstellungsverfahren zur Herstellung eines derart verbesserten elektrischen Isolationssystems eines Elektromotors.

Bekannt sind Blechpakete von Elektromotoren, die Nuten mit einer Draht-Wicklung, in der Regel einer Kupferdraht-Wicklung, wobei der Draht durch einen Drahtlack elektrisch isoliert ist, umfassen. Dabei gibt es je nach Größe und Leistungsklassen unterschiedliche Möglichkeiten, Elektromotoren zu fertigen.

In der Größenordnung von Achshöhe 63mm bis 450 mm und entsprechend den Leistungen von 150W bis 1,6 MW wird typischerweise der so genannte Stator, also das Blechpaket mit vorgewickelten Draht-Wicklungen bestückt. Diese Wicklungen werden dabei in die Statornuten mechanisch eingebracht und anschließend geschaltet. Die elektrische Isolation der Einzeldrähte untereinander sowie gegenüber dem auf Erdpotential liegenden Blechpaket ist durch Flächenisolationsmaterialien, wie Papier, und dem Drahtlack der einzelnen Wicklungsdrähte gegeben. Aufgrund der geometrischen Anforderungen der Nuten wie dem Nutzahn, der zur Ausbildung möglichst geschlossener Magnetfeldlinien dient, ist eine maximale Nutfüllung von 85 Vol% mit Wickeldraht, Flächenisolationsstoff, inklusive Drahtlack möglich, da sonst beispielsweise die Einziehkräfte zu groß werden würden und damit die Flächenisolation und/oder der Drahtlack beschädigt werden könnten, beispielsweise durch Kratzer, Risse und/oder durch Dehnung. Im Ergebnis bleiben mindestens 15 Vol% freies Volumen in den Nuten des Blechpakets. Ein Teil davon liegt frei, weil die Wicklung nicht passgenau die Ecken der Nut ausfüllt, aber innerhalb der Wicklung werden bestehende Hohlräume im Imprägnierprozess möglichst vollständig mit Imprägnierharz gefüllt.

Leider hat sich gezeigt, dass hier erhebliche Lücken bestehen, weil das Imprägnierharz beim Herausholen des Stators aus dem Tauchbad oft noch so flüssig ist, dass hier keine ausreichende Füllung der Hohlräume auch innerhalb des Leiters, also der Draht-Wicklung, stattfindet.

Dazu werden in der Regel in einem Tauchverfahren ein oder mehrere Statoren langsam in ein Flüssig-Imprägnier-Harzbecken getaucht, damit das flüssige Imprägnierharz in die Hohlräume zwischen den Einzeldrähten, der Nut und dem Blechpaket fließen und diese Hohlräume ausfüllen kann. Im Anschluss werden die so getränkten Statoren durch Temperatureinwirkung und/oder UV-Bestrahlung über einen gewissen Zeitraum gehärtet. Dadurch wird aus dem flüssigen und/oder gelierten Imprägnierharz, das im Tauchbad die verbleibenden Hohlräume der Nuten, in dem Volumen, das nach der Draht-Wicklung noch hohl ist, ausfüllt, der fertige Verguss, beispielsweise in Form eines vollständig ausgehärteten Duromers als Vergussmasse.

Die möglichst vollständige Füllung der Hohlräume mit Vergussmasse ist insbesondere deshalb so wichtig, weil die Entwärmung der Drahtwicklung, die mechanische Fixierung gegen Schwingungen, die Teilentladungsresistenz gegenüber dem Blechpaket und/oder die Passivierung gegen Staub und/oder Feuchtigkeit des Blechpakets und des Leiters nur durch möglichst vollständige Füllung mit Verguss gewährleistet ist.

Eine vollständige Füllung der vorliegenden Zwischenräume ist jedoch mit herkömmlichen Methoden, wie beispielsweise einer Tauchimprägnierung sowie der geforderten Fertigungsvarianz, bei der Imprägnierharz und Tauchverfahren nicht auf eine Stator-Sorte optimiert, sondern auf einen Mittelwert über alle, die auf dieser Fertigungslinie imprägniert werden, eingestellt sind, nicht möglich. Es verbleiben eigentlich immer Hohlräume und Fehlstelle, etwa durch zurückfließendes Imprägnierharz und/oder nicht ordentlich einfließendes Imprägnierharz, weil beispielsweise die Viskosität im Tauchbad nicht niedrig genug eingestellt ist.

Im Tauchbad können die genannten Eigenschaften des Imprägnierharzes auch nicht durch Zumischung bestimmter Additive in Form von partikulären Füllstoffen optimiert werden. Derartige Additive wären beispielsweise Glimmerplättchen zur Erhöhung der Teilentladungsresistenz, Quarzmehl, Aluminiumoxid und/oder Bornitrid zur Erhöhung der Wärmeleitfähigkeit.

Aufgrund der steigenden Viskosität und/oder dem Absetzverhalten im Tauchbad können über ein Tauchbadverfahren keine Additive in das Imprägnierharz, das später den Verguss des Leiters im Isolationssystem bildet, eingebracht werden.

Bei der Tauch-Imprägnierung und auch bei den anderen Imprägniermethoden wie Vakuumimprägnierung, Sprühimprägnierung etc. von Statoren ergeben sich meist durch ungenügende Imprägnierharz-Aufnahme Fehlstellen im elektrischen Isolationssystem EIS, die flächig in größeren Spalten Hohlräume bilden. Insbesondere durch eine so genannte "wilde Wicklung", die eine gestörte Ordnung zwischen Nutkasten und Blechpaket erzeugt, werden derartige Fehlstellen geschaffen, die eine überproportionale Minderung der mechanischen Fixierung der Wickel-Drähte im Verguss bewirken, weil die Wickel-Drähte teilweise mehrere Zentimeter lang keine Fixierung haben und somit anfällig für mechanische Oberschwingungen des Motors sind. Dies endet im Betrieb des Öfteren in Brüchen der elektrischen Metallleitungen, insbesondere der Kupferleitungen, die sich in den Wickel-Drähten unter dem isolierenden Drahtlack befinden. Darüber hinaus sind solche großflächigen Fehlstellen quasi offenporig und somit anfällig für Staub, metallischen Abrieb und Feuchtigkeit, wodurch die Leistungsfähigkeit des Motors und letztendlich auch dessen Lebensdauer beeinträchtigt werden.

Bisher werden die Imprägnierharze kostspielig insofern weiterentwickelt, dass eine Thixotropierung des Imprägnierharzes im Tauchbad vorgenommen wird, d.h. das Imprägnierharz verflüssigt sich beim Eintauchen der Statoren aufgrund der Scherverdünnung und verbleibt dann höher viskos in der Nut.

Darüber hinaus weist das Imprägnierharz einen sehr schmalen Gelierbereich auf, um zwar vollständig in die Nut zu fließen, dann aber zuverlässig zu gelieren, gleichzeitig aber an der etwas kälteren Außenseite des Blechpakets bestmöglich wieder abzufließen, da hier das Harz eher hinderlich ist. Hierbei werden teilweise die Statoren vorgeheizt um beim Eintauchen den Effekt der temperaturbedingten Viskositätsverringerung zu nutzen. Die Vorvernetzung - auch Gelierung genannt - im Leiter selbst benötigt hierbei mehrere Minuten Prozesszeit. Generell ist der Fertigungsprozess der Tauchimprägnierung auf viele verschiedene Stator-Varianten hinsichtlich Harz, Geschwindigkeit und/oder Temperatur abgestimmt, wodurch nur ein Mittelwert geschaffen wird, bzw. das Imprägnierharz im Tauchbad für einige weniger anspruchsvolle Statoren überdimensioniert ist.

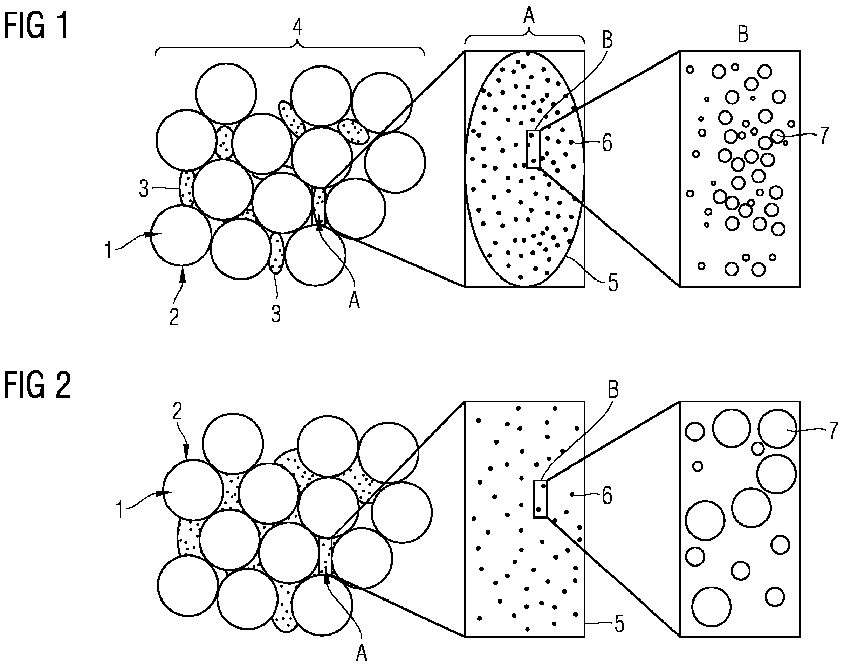

Somit ist die Tauchimprägnierung im Mittel über alle Stator-Varianten oftmals mit flächigen Fehlstellen verbunden, was zu den oben angeführten Missständen führt, wie sehr geringe Wärmeleitfähigkeit und/oder Hotspots durch Luftspalten, Teilentladungen in großen luftgefüllten Lücken, mechanische Belastungen von großflächig nicht fixierten Drähten, Feuchtigkeitseinzug/Staub, wie in Figur 1, die den Stand der Technik zeigt, dargestellt. Diese Probleme können durch eine optimierte Parametereinstellung der Tauchimprägnierung sowie ein hochentwickeltes, insbesondere hinsichtlich seines Gelpunktes hochentwickeltes Imprägnierharz nur minimiert und nicht verhindert werden.

Aufgabe der vorliegenden Erfindung ist es daher, eine Möglichkeit zu schaffen, die eine zielgerichtete Füllung der Nuten eines Stators mit einem für den Motortyp geeigneten Imprägnierharz, das insbesondere auch Additive und/oder Füllstoffe umfasst, ermöglicht.

Diese Aufgabe wird durch den Gegenstand der vorliegenden Erfindung, wie er in der Beschreibung, den Figuren und den Ansprüchen offenbart wird, gelöst.

Dementsprechend ist Gegenstand der vorliegenden Erfindung ein elektrisches Isolationssystem EIS eines Elektromotors, zumindest einen Leiter mit Wickel-Draht in einer Nut eines Blechpakets eines Stators umfassend, dadurch gekennzeichnet, dass die Draht-Wicklung im Leiter in einen Verguss eingebettet ist, in dem volumenvergrößernde Partikel vorliegen. Darüber hinaus ist Gegenstand der vorliegenden Erfindung ein Verfahren zur Herstellung eines elektrischen Isolationssystems EIS eines Elektromotors, folgende Verfahrensschritte umfassend:
- Bildung eines Leiters aus Wickel-Draht und mit gefülltem Imprägnierharz beladenem Trägermedium
- Einziehen des gebildeten Leiters in die Nuten eines Blechpakets eines Stators des Elektromotors,
- Aufwärmen des Blechpakets in einer Temperatur und Geschwindigkeit, dass im Imprägnierharz vorhandene gasgefüllte Partikel sich unter Volumenvergrößerung so ausdehnen, dass sie das Volumen des noch nicht gehärteten Imprägnierharzes vergrößern und
- Aushärten der imprägnierten Wickel-Draht-Träger-Isolation.

Allgemeine Erkenntnis der Erfindung ist es, dass ein Trägermedium, wie beispielsweise eine Faser oder ein Faserverbund, sich einerseits problemlos in den Wickel-Prozess zur Herstellung der Draht-Wicklung integrieren lässt, sich zweitens mit genug Gehalt an Imprägnierharz beladen lässt, um damit den vollständigen Kunstharz-Verguss für ein elektrisches Isolationssystem eines Elektromotors zu stellen und drittens, beim Beladen des Trägermediums ein gefülltes Imprägnierharz verwendet werden kann, so dass beliebige Füllstoffe und/oder Additive über die gezielte Einbringung eines Imprägnierharzes mittels Trägermedium in die Nutisolation einführbar sind.

Als "Trägermedium" oder "Imprägnierharz-Träger" werden vorliegend bevorzugt Prepreg-Fasern, allein oder in Kombination mit weiteren Trägern eingesetzt. Weitere Träger in diesem Sinne können beispielsweise Schwämme und/oder Schäume sein.

Als "Leiter" wird vorliegend ein Bündel von Wickel-Drähten bezeichnet, die zusammen gewickelt werden und ein Bündel von Wickel-Drähten bilden, das in eine Nut eines Blechpakets eingezogen wird.

Gemäß der vorliegenden Erfindung bläht sich das mit Volumen-vergrößernden Partikel gefüllte Imprägnierharz während der Herstellung der fertigen EIS auf, so dass hier erst im fertigen Elektromotor ein fixes Verhältnis von Draht zu Trägervolumen in der Wicklung oder im Leiter bestimmt werden kann. Da durch das Aufblähen von einer Volumenvergrößerung der bereits in der Nut liegenden Wicklung ausgegangen wird, kann auch im fertigen EIS ein Volumen% von mehr als 40Vol% im Leiter durch das Imprägnierharz innerhalb der Draht-Wicklung nachweisbar sein.

Dabei ist es insbesondere auch vorteilhaft, wenn die Prepreg-Fasern gleichzeitig mit der Bündelung der Wickel-Drähte, insbesondere der Kupfer-Drähte mit gewickelt werden und so zwischen den Wickel-Drähten im Leiter mit diesen in der Wicklung und im fertigen Elektromotor vorliegen.

Nach einer bevorzugten Ausführungsform der Erfindung wird dabei die Anzahl der Prepreg-Faserwindungen im Verhältnis zu den Wickel-Drahtwindungen so gering wie nötig gewählt, um keinen Platz in der Nut, der mit Wickel-Draht befüllbar wäre, zu verschwenden.

Die Anzahl der Prepreg-Faserwindungen und die Größe der Prepreg-Faservolumen wird entsprechend im Spannungsfeld zwischen hoch genug, dass eine möglichst vollständige Durchtränkung des Statorpakets nach der Härtung vorliegt und so gering wie möglich, damit der Volumenfüllgrad in der Nut mit Leitungsmaterial, insbesondere mit leitfähigem Wicklungs-Draht, bevorzugt mit Kupferdraht, nicht darunter leidet, ausgewählt. Durch die Einbringung des Imprägnierharzes zur Herstellung des EIS kann dabei je nach Motorentyp ganz einfach bei der Wicklung durch Zugabe /Reduktion der mit gewickelten Prepreg-Fasern in weiten Bereichen variiert werden.

Beispielsweise liegen Lang- und/oder Endlos-Fasern im Leiter mit Wickeldraht im Verhältnis von 1 Volumen-Anteil Faser zu 3 Volumen-Anteilen Wickeldraht vor. Insbesondere liegt das Verhältnis Prepreg-Faser zu Wickeldraht im Bereich von 1 zu 3, wie oben beschrieben, bis zu 2 Volumenanteile Prepreg-Faser zu 1 Volumenanteil Wickel-Draht, also mehr Prepreg-Faser-Anteile als Wickeldraht-Anteile im Leiter. Die jeweiligen Anteile richten sich beispielsweise nach der Saugfähigkeit der Faser, also dem Harzinhalt pro Volumenanteil Faser, dem Durchmesser der Faser etc.

Insbesondere vorteilhaft ist bei der gezielten Einführung von Imprägnierharz die Füllung mit volumenvergrößernden Füllstoffen, wie beispielsweise gasgefüllten Mikrokapseln, die unter anderem von der Firma Akzo Nobel unter dem Namen Expancel® im Handel erhältlich sind.

Nach einer vorteilhaften Ausführungsform werden 1 bis 10 Gew% dieser volumenvergrößernden Partikel in das flüssige Imprägnierharz, das auch als Reaktionsharz bezeichnet wird, eingebracht und mit diesem das Trägermedium, durch das das gefüllte Imprägnierharz gezielt in die Nutisolation einbringbar ist, beladen. Das beladene Trägermedium und/oder die beladene Faser werden beispielsweise als "gefülltes Halbzeug" bezeichnet.

Durch Einbringung von beispielsweise zwischen 2 Gew% und 6 Gew%, insbesondere zwischen 3 Gew% und 5 Gew%, kann eine Volumenvergrößerung des Trägermediums und/oder des Imprägnierharz-Volumens um den Faktor 2 bewirken.

Darüber hinaus können über die Beladung eines Trägermediums mit gefülltem Imprägnierharz weitere Füllstoffe, wie Glimmer, Aluminiumoxid, Bornitrid in beliebigen Füllstofffraktionen in die Nutisolation eingebracht werden.

Des Weiteren können über die Beladung eines Trägermediums mit gefülltem oder ungefülltem Imprägnierharz verschiedene Additive in den Verguss der Nutisolation eingebracht werden.

Beispielsweise wird als Imprägnierharz ein Duromer, wie ein Epoxidharz, Bakelit, vernetzbares Polyurethan und/oder Polyesterharz eingesetzt.

Entscheidend dabei ist, dass das Imprägnierharz B-Zustand fähig ist. Der Träger, der nach einer bevorzugten Ausführungsform der Erfindung zum Einbringen des Imprägnierharzes in den Leiter genutzt wird, wird dazu mit dem gefüllten Imprägnierharz im B-Zustand beladen, um das Imprägnierharz in den Leiter zu bringen. Danach wird der Leiter samt Stator erwärmt, so dass das Imprägnierharz wieder schmilzt und sich homogen im Leiter verteilen kann. Erst nach erfolgter homogener Verteilung des Imprägnierharzes im Leiter wird dieser soweit erhitzt, dass eine vollständige Durch-Härtung des Imprägnierharzes zum fertigen Verguss resultiert.

Als "B-Zustand eines Harzes" wird vorliegend ein Harz, beispielsweise ein Duromer bezeichnet, das - insbesondere bei Raumtemperatur - oberflächlich geliert, gegebenenfalls leicht klebrig, aber noch nicht durch gehärtet vorliegt. Dieser Zustand wird auch als Vorprodukt und/oder als Prepolymer bezeichnet.

Dieser Zustand des Prepolymers ist gegeben, wenn das Imprägnierharz nur zu geringen Teilen vernetzt ist, dabei aber oberflächlich eine gewissen Stabilität erhält, so dass es zwar nicht fest und vernetzt aber auch nicht mehr flüssig vorliegt. Im B-Zustand kann ein Duromer nochmal aufgeschmolzen und verflüssigt werden ohne sich zu zersetzen.

Die gemäß der Erfindung bevorzugt bei der Herstellung des Leiters, also der Wicklung der leitfähigen und mit Drahtlack isolierten Wickel-Drähte, eingesetzten Trägermedien sind Fasern, die als Prepreg-Fasern verwendet werden. Das Vorimprägnieren einer Faser zur Herstellung der Prepreg-Faser kann beispielsweise durch eine Tauchimprägnierung der Faser erfolgen. Dabei werden Fasern durch ein Tauchbad, das das Imprägnierharz, beispielsweise ein gefülltes und/oder mit Additiven versetztes Imprägnierharz, gegebenenfalls mit einem Lösungsmittel verdünnt, enthält. Die noch unbeladene Faser wird in einer vorgegebenen Geschwindigkeit durch das Tauchbad durchgezogen, wobei die Faser erst mal oberflächlich und je nach Saugfähigkeit der Faser auch innerhalb der Faser, beispielsweise in offenen Poren und/oder Flecht- oder Verfilzungs-Hohlräumen, Imprägnierharz aufnimmt. Nach Beendigung des Tauchbads wird die vorimprägnierte Faser getrocknet und so von Lösungsmittel befreit. Dabei wird auch der B-Zustand des Imprägnierharzes in und an der Faser erzeugt. Es ist möglich, dass die mit Imprägnierharz im B-Zustand benetzte Faser oberflächlich leicht klebrig ist.

Die so imprägnierte und getrocknete Faser nennt man dann "Prepreg-Faser". Sie fällt auch unter den Begriff "Halbzeug". Im Gegensatz dazu wird die Faser, die keinen oder nur geringen Rest-Gehalt an Imprägnierharz ausweist, schlicht als "Faser" bezeichnet.

Im Folgenden wird anhand einer Figur die Funktionsweise der expandierenden Partikel schematisch dargestellt.

Zu erkennen sind in beiden Figuren die Wickel-Drähte 1, jeweils von Drahtlack 2 umgeben. Die Wickel-Drähte 1 bilden, wie jeweils links zu sehen ist, zusammen mit den Prepreg-Fasern 3 ein Bündel, den Leiter 4. Die Wickel-Drähte 1 liegen dabei gleich ausgerichtet, bevorzugt natürlich parallel oder ungefähr gleich ausgerichtet, also quasi parallel im Leiter 4 vor.

In den Figuren 1 und 2 mittig ist der Ausschnitt A der linken Seite der Figuren 1 und 2 gezeigt, wobei der Ausschnitt A stark vergrößert dargestellt ist. In der jeweils mittigen Darstellung ist dabei erkennbar, dass im Imprägnierharz 5 des Trägermediums, wie der Prepreg-Faser 3, Füllstoffe 6 vorliegen. Ganz rechts in den beiden Figuren 1 und 2 wird wiederum ein Ausschnitt B aus der mittigen Darstellung A vergrößert wieder gegeben. Zu erkennen ist dabei, dass die Füllstoffpartikel durch Volumenvergrößerung bei einer definierten Temperatur erweichen und expandieren. Dabei setzt ein Schäumungseffekt ein, der einen Verschluss größerer Hohlräume und Fehlstellen mit Imprägnierharz bewirkt. Hier wurde ein funktionell gefülltes Imprägnierharz 3 im B-Zustand eingesetzt, das ab einer bestimmten Härtungstemperatur eine Expansion erfährt, so dass verarbeitungstechnisch vorhandene Hohlräume der Nutisolation durch das quellende Material gefüllt werden. Hierzu können beispielsweise expandierende, thermoplastische Hohlsphären wie die der Firma Akzo Nobel, unter dem Handelsnamen Expancel® erhältlich, eingesetzt werden.

Es hat sich gezeigt, dass zusätzlich zur vollständigeren Füllung der Hohlräume die Wärmeleitfähigkeit und die Teilentladungsresistenz des elektrischen Isolationssystems EIS unter Verwendung eben solcher Partikel verbessert werden konnte.

In Tests konnte gezeigt, werden, das selbst kleine Mengen an dem volumenvergrößernden Partikel bei entsprechender Temperatur einen starken Schäumungseffekt mit einer VolumenVergrößerung um ein Vielfaches zeigen.

In weiteren Tests konnte nachgewiesen werden, dass gedrillte Prepreg-Fasern mit Kupferleitern bereits vor der vollständigen Aushärtung, im B-Zustand eine deutliche Volumenvergrößerung zeigen. So konnte eine Nutisolation, die grundsätzlich frei von makroskopisch erkennbaren Poren ist, wiederholt hergestellt werden. Die einzelnen Wickel-Drähte werden durch Schäumungskraft auseinandergetrieben und mechanisch im Verguss fixiert.

Gemäß der vorliegenden Erfindung können funktionell gefüllte Reaktions- und/oder Imprägnierharze eingesetzt werden, die über die Beladung eines Trägermediums, wie einer Faser, als Prepreg-Faser in die Nutisolation einführbar sind. Diese gefüllten Imprägnierharze eignen sich nicht für ein Imprägnierverfahren per Tauchbad.

Nach einer beispielhaften Ausführungsform der Erfindung wurden zudem über 50 Gew% Quarzmehl mit in das Prepreg eingebracht, um die Wärmeleitfähigkeit des mikroporösen Materials zu erhöhen. Somit ergibt sich trotz der positiven Wirkung des Schäumungseffekts kein Nachteil in der Wärmeleitfähigkeit an den sonst luftumschlossenen Hotspots, welche durch das Tauchimprägnierverfahren entstehen. Da es sich um ein geschlossenporiges System handelt und eben die makroskopischen "offenen Poren" durch die Schäumung geschlossen werden, ist eine Passivierung und mechanische Fixierung ebenfalls gegeben. Die Teilentladungsresistenz ist bei sonst gleichen dielektrischen Eigenschaften des Kunststoffes in den fehlerhaften Bereichen ebenso verbessert.

Durch die vorliegende Erfindung wird gezeigt, dass in Kombination mit der Verwendung von Prepreg-Fasern als Trägermedium für Imprägnierharz thermisch expandierende, besser wärmeleitfähige, und/oder Teilentladungsresistentere Imprägnierharze und Verguss-Materialien zum Einsatz kommen, die mittels Tauchimprägnierung nicht verwendbar wären. Somit werden die Lebensdauer und die Leistung der Motoren erhöht. Zudem entfallen Fertigungskosten durch Wegfall des Tauchbad-Imprägnier-Prozesses.

Nach einer vorteilhaften Ausführungsform der Erfindung werden im Stator der Deckschieber und/oder der Nutkasten und/oder die Bandagen mit funktionellen Partikeln und/oder funktionell gefüllten Imprägnierharzen vorimprägniert werden um die Imprägnierharz-Menge im Stator weiter zur erhöhen.

Die Expansionsgrößen der Partikel können variiert werden um gegebenenfalls die Teilentladungsresistenz weiter zu erhöhen. Dabei wird die Expansionsgröße bevorzugt gemäß der Paschen-Gleichung, die besagt, dass Teilentladungen erst ab einer Mindest-Porengröße zünden, gewählt. So dient eine bewusst zur Steigerung der Teilentladungsresistenz eingebrachte kleinere Porosität dazu, eine größere Porosität, wie die zwischen dem Leiter und den Nutecken, zu verhindern. Die insbesondere auch deswegen, weil das Flächenisolationsmaterial, also beispielsweise das Papier, bei Volumenvergrößerung in die Nutecken gedrückt wird und damit den Hohlraum zwischen Leiter und Nutecke verkleinert und damit das Risiko von Teilentladungen.

Gemäß der vorliegenden Erfindung wird eine Imprägnierung eines Leiter-bestückten Blechpakets nicht durch Tauchimprägnierung, sondern durch gezieltes Einbringen eines Imprägnierharzes, das mit Volumen-vergrößernden Partikel gefüllt ist, in die Nuten des Blechpakets vorgeschlagen.

## Patentansprüche

1. Elektrisches Isolationssystem EIS eines Elektromotors, zumindest einen Leiter mit Draht-Wicklung in einer Nut eines Blechpakets eines Stators umfassend, **dadurch gekennzeichnet, dass** die Draht-Wicklung im Leiter in einen Verguss eingebettet ist, in dem volumenvergrößernde Partikel vorliegen.

2. Isolationssystem nach Anspruch 1, wobei der Leiter neben den Wickel-Drähten zumindest einen Träger zur Versorgung der Draht-Wicklung mit Imprägnierharz umfasst.

3. Isolationssystem nach einem der Ansprüche 1 oder 2, wobei der Verguss Füllstoffe aufweist.

4. Isolationssystem nach einem der vorhergehenden Ansprüche, wobei der Verguss Glimmerpartikel als Füllstoff aufweist.

5. Isolationssystem nach einem der vorhergehenden Ansprüche, wobei der Verguss Aluminiumoxid-Partikel als Füllstoff aufweist.

6. Isolationssystem nach einem der vorhergehenden Ansprüche, wobei der Verguss Bornitrid-Partikel als Füllstoff aufweist.

7. Isolationssystem nach einem der vorhergehenden Ansprüche, wobei der Träger Fasern umfasst.

8. Isolationssystem nach einem der vorhergehenden Ansprüche, wobei die volumenvergrößernden Partikel gasgefüllte Partikel umfassen.

9. Isolationssystem nach einem der vorhergehenden Ansprüche, wobei der Verguss Additive aufweist.

10. Isolationssystem nach einem der vorhergehenden Ansprüche, wobei der Verguss ein Epoxidharz umfasst.

11. Isolationssystem nach einem der vorhergehenden Ansprüche, wobei der Verguss im Wesentlichen frei von Makroporen ist.

12. Verfahren zur Herstellung eines elektrischen Isolationssystems EIS eines Elektromotors, folgende Verfahrensschritte umfassend:
- Bildung eines Leiters aus Wickel-Draht und mit gefülltem Imprägnierharz beladenem Trägermedium
- Einziehen des gebildeten Leiters in die Nuten eines Blechpakets eines Stators des Elektromotors,
- Aufwärmen des Blechpakets in einer Temperatur und Geschwindigkeit, dass im Imprägnierharz vorhandene gasgefüllte Partikel sich unter Volumenvergrößerung so ausdehnen, dass sie das Volumen des noch nicht gehärteten Imprägnierharzes vergrößern und
- Aushärten der imprägnierten Wickel-Draht-Träger-Isolation.

13. Verfahren nach Anspruch 12, bei dem als Trägermedium Fasern in Form von Prepreg-Fasern eingesetzt werden.
